# EUROPÄISCHE PATENTANMELDUNG

(11) **EP 4 079 601 A1**
(43) Veröffentlichungstag der Anmeldung: **26.10.2022**
(21) Anmeldenummer: 22162409.1
(22) Anmeldetag: 16.03.2022
(51) Int. Cl.: B62B 3/02, B62B 5/00

(54) **HANDWAGEN ZUM DIREKTEN VERLADEN IN EIN KRAFTFAHRZEUG**

(30) Priorität: 23.04.2021 DE 102021110421
(71) Anmelder: Barthel, Sandy, 09123 Chemnitz (DE)
(72) Erfinder: Barthel, Sandy, 09123 Chemnitz (DE)
(74) Vertreter: Rumrich, Gabriele

(57) **Zusammenfassung**

Die Erfindung betrifft einen Handwagen zum direkten Verladen in ein Kraftfahrzeug, insbesondere in den Laderaum eines Kraftfahrzeugs, wobei der Handwagen ein einklappbares Fahrwerk mit einem ersten Rahmenelement und einem zweiten Rahmenelement mit daran angeordneten Rädern aufweist, das an einem ersten Längsträger und einem, über ein Grundelement (1) mit dem ersten Längsträger verbundenen parallelen zweiten Längsträger schwenkbar gelagert ist, wobei das erste Rahmenelement mittels einer Achse in einer Bohrung der Längsträger und das zweite Rahmenelement in einer Führung entlang der Längsträger verschiebbar gelagert ist und wobei die Längsträger je einen ersten Endbereich und einen, dem ersten Endbereich gegenüberliegenden, zweiten Endbereich aufweisen, wobei im ersten Endbereich je Längsträger ein Rollelement angeordnet ist, auf dem der Handwagen in den Kofferraum schiebbar ist und im zweiten Endbereich je Längsträger ein Gelenkpunkt für eine Abstützstrebe des hinteren Rahmenelements und eines Schiebegriffelements angeordnet ist derart, dass im zusammengeklappten Zustand das Schiebergriffelement auf im Wesentlichen die Höhe des Grundelements klappbar ist.

## Beschreibung

Die Erfindung betrifft einen Handwagen zum direkten Verladen in ein Kraftfahrzeug und findet insbesondere für die Verladung in einen Kofferraum eines Kraftfahrzeuges ohne erneutes Umpacken der Waren Anwendung.

Die Druckschrift DE 10 2010 022 452 A1 offenbart einen Handwagen, insbesondere einen Einkaufswagen, mit wenigstens einem Behältnis zur Aufnahme und/oder zum Transport von Gegenständen und mit wenigstens einem das Behältnis tragenden Fahrgestell zum Verfahren des Behältnisses. Des Weiteren weist der Handwagen wenigstens eine Schiebeeinrichtung mit einem Griff und einem Griffbereich auf, mittels dessen ein manuelles Schieben und/oder Ziehen erfolgt.

Das Fahrgestell weist wenigstens ein gegenüber dem Behältnis zumindest zwischen wenigstens zwei Stellungen hin und her bewegbares Fahrgestellelement auf.

Aus der Druckschrift DE 20 2010 014 136 U1 ist ein faltbarer Einkaufswagen bekannt, wobei je zwei der Räder in einem Radrahmen angebracht sind, die unter dem faltbaren Warenkorb raumsparend beigeklappt werden können.

Das Gefährt weist zusätzliche Rollen zur rollenden Bewegung der Last im Laderaum von Fahrzeugen auf, wobei diese an dem vorderen Radrahmen ausgebildet sind und bei eingeklapptem Radrahmen auf der Ladefläche des Fahrzeuges aufliegen. Nachteilig ist, dass diese Art des Einkaufswagens im Kofferraum kippen und verrutschen kann, da die Auflagefläche durch die Rollen sehr klein ist.

In der Druckschrift FR 2850623 A1 wird ein Einkaufswagen beschrieben, der ein vorderes und ein hinteres Traggestell aufweist, wobei das hintere Traggestell einen Drehpunkt am Einkaufskorb aufweist und im verladenen Zustand um den Einkaufskorb schwenkbar ist, so dass die Rollen oberhalb des Einkaufskorbes angeordnet sind. Eine derartige Ausgestaltung benötigt jedoch viel Platz in einem Laderaum, insbesondere in dessen Höhe. Der Einkaufskorb ist starr und kann nicht in seiner Größe reduziert werden.

Ein weiteres faltbares System für ein Fahrgestell eines Einkaufswagens ist aus der Druckschrift FR2775645B1 bekannt. Das offenbarte System weist jedoch einen komplizierten Aufbau mit mehreren Getriebeelementen auf. Des Weiteren ist der Platzbedarf in einem Laderaum sehr groß.

Die Druckschrift DE 10 2008 031 541 A1 beschreibt einen Transportwagen, insbesondere einen Einkaufswagen, der ein zusammenklappbares Fahrgestell aufweist. Gemäß der Ausgestaltung weist der Einkaufswagen ein Gestell und einen Einkaufskorb auf, die getrennt voneinander gelagert und transportiert werden können. Der Einkaufskorb ist ebenfalls klappbar auf dem Fahrgestell befestigbar. Nachteilig sind der große Platzbedarf und die fehlende Möglichkeit, den Einkaufswagen beladen in einen Laderaum eines Fahrzeugs hineinzuschieben.

Die Druckschrift FR 2 971 220 A1 beschreibt einen Handwagen, der zusammenfaltbar ist, wobei der Handwagen eine obere und eine parallele untere Ebene aufweist, die über Streben miteinander verbunden sind. Je nach Positionierung der Streben kann der Abstand zwischen der unteren und oberen Ebene eingestellt werden. Der Handwagen weist an seiner Unterseite Rollen auf, mittels derer er verschiebbar ist. Diese Ausgestaltung weist einerseits einen sehr großen Platzbedarf im gefalteten Zustand und andererseits keine Möglichkeit auf, den Handwagen in einen Laderaum zu schieben.

Ein Transportwagen für Lastgüter ist aus der Druckschrift FR 2 987 592 bekannt. Der Transportwagen weist einen Faltmechanismus für das Zusammengelegen der oberen und unteren Ebene auf. Jedoch ist der Transportwagen nicht für einen Einkaufskorb oder den Einsatz in einem Fahrzeug geeignet.

Aufgabe der Erfindung ist es, einen Handwagen zum direkten Verladen in ein Kraftfahrzeug zu entwickeln, welcher einen einfachen konstruktiven Aufbau aufweist und im zusammengeklappten Zustand einen gegenüber dem Stand der Technik geringeren Platzbedarf hat.

Diese Aufgabe wird mit den Merkmalen des ersten Patentanspruchs gelöst.

Vorteilhafte Ausgestaltungen ergeben sich aus den Unteransprüchen.

Der Handwagen zum direkten Verladen in ein Kraftfahrzeug, insbesondere in den Laderaum eines Kraftfahrzeugs, weist ein einklappbares Fahrwerk mit einem ersten Rahmenelement und einem zweiten Rahmenelement mit daran angeordneten Rädern auf, das an einem ersten Längsträger und einem, über ein Grundelement mit dem ersten Längsträger verbundenen parallelen zweiten Längsträger schwenkbar gelagert ist. Das erste Rahmenelement mittels einer Achse in einer Bohrung der Längsträger und das zweite Rahmenelement in einer Führung entlang der Längsträger verschiebbar gelagert. Die Längsträger weisen je einen ersten Endbereich und einen, dem ersten Endbereich gegenüberliegenden, zweiten Endbereich auf, wobei im ersten Endbereich je Längsträger ein Rollelement angeordnet ist, auf dem der Handwagen in den Kofferraum schiebbar ist und wobei im zweiten Endbereich je Längsträger ein Gelenkpunkt für eine Abstützstrebe des hinteren Rahmenelements und ein Abstützelement eines an dem Bolzen montierten Schiebegriffelements angeordnet ist derart, dass im zusammengeklappten Zustand das Schiebergriffelement auf im Wesentlichen die Höhe des Grundelements klappbar ist.

Bevorzugt ist das Rollelement in Form einer, an dem Längsträger drehbar gelagerten Grundplatte mit wenigstens zwei hintereinanderliegend angeordneten Rollen ausgebildet. Die Rollen weisen je eine Rotationsachse auf, die nach innen in Richtung des gegenüberliegenden Längsträgers weist. Besonders bevorzugt sind drei hintereinanderliegende Rollen je Seite vorgesehen. Damit wird ein stabiler nicht kippender Stand im Kofferraum erreicht.

Das Grundelement ist bevorzugt derart gestaltet, dass es eine umfangsseitige Führung für einen Einkaufskorb oder ähnliche Aufbewahrungsmittel aufweist. Insbesondere ist der Handwagen für klappbare Einkaufskörbe geeignet. Das Grundelement weist ein erstes Halteelement an einer ersten Seite und ein, dem ersten Halteelement gegenüberliegend zweites Halteelement auf, wobei das zweite Halteelement herausnehmbar und/oder verstellbar ist. Eine umlaufende Kante eines typischen Einkaufskorbs ist so unter die Halteelemente schiebbar derart, dass eine Fixierung des Einkaufskorbs auf dem Grundelement erfolgt.

Der Klappmechanismus des vorderen Rahmenelements ist bevorzugt mittels einer Fernsteuerung entriegelbar. Diese Fernsteuerung wird insbesondere in Form eines Seilzugs umgesetzt, wobei das vordere Rahmenelement mittels des Seilzugsystems aus einer festen Position entriegelbar ist.

Das hintere Rahmenelement ist bevorzugt an dem ersten Längsträger mittels eines ersten Bolzens und an dem zweiten Längsträger mittels eines zweiten Bolzens in der jeweiligen Führung gelagert, wobei die Führung eine Ausbuchtung nach oben aufweist, in die sich die Bolzen in der ausgeklappten Position drücken.

In einer vorteilhaften Ausgestaltung sind mittels der Bolzen das hintere Rahmenelement und das Schiebegriffelement koaxial gelagert und miteinander verbunden.

Eine weitere vorteilhafte Ausgestaltung ist, dass das hintere Rahmenelement mittels eines drehbaren Riegels in der Führung gegen ein unbeabsichtigtes Einklappen gesichert ist. Diese Merkmale erhöhen den Bedienkomfort und die Sicherheit bei der Nutzung des Handwagens.

Der Riegel ist bevorzugt über ein Rohr mit einem Hebel verbunden, der mittels Nuten in einer ersten und zweiten Position fixierbar ist, wobei die erste Position des Riegels das hintere Rahmenelement gegen ein Einklappen fixiert und die zweite Position die Führung frei gibt.

In einer vorteilhaften Ausgestaltung des Handwangens ist das vordere Rahmenelement in Form eines Biegeprofils ausgebildet. In einer weiteren vorteilhaften Ausgestaltung sind zudem die Räder abnehmbar. In einer alternativen Ausgestaltung können die Räder über ein Getriebe einklappbar sein.

Der erfindungsgemäße Handwagen ist skalierbar ausgebildet, das heißt er kann an verschiedene Größen in Abhängigkeit der verschieden großen Klappboxen oder ähnlichen Behältnissen angepasst werden.

Die Erfindung wird nachfolgend an einem Ausführungsbeispiel und zugehörigen Zeichnungen näher erläutert.

Es zeigen:
- Figur 1: einen Handwagen im Betriebszustand,
- Figur 2: einen Handwagen zusammengeklappt in einer Seitenansicht,
- Figur 3: einen Handwagen zusammengeklappt in einer Ansicht von schräg unten,
- Figur 4: das Grundelement im Einzelnen,
- Figur 5: einen Längsträger in einer dreidimensionalen Darstellung,
- Figur 6: das Seilzugsystem,
- Figur 7: den Riegelmechanismus für das hintere Rahmenelement,
- Figur 8: eine Explosionsdarstellung des Riegelmechanismus.

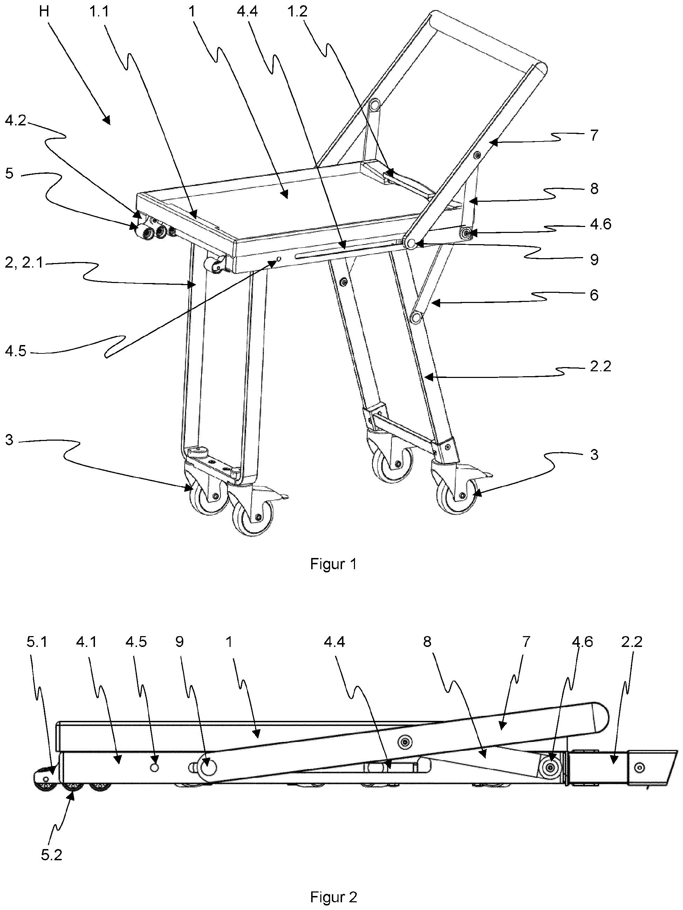

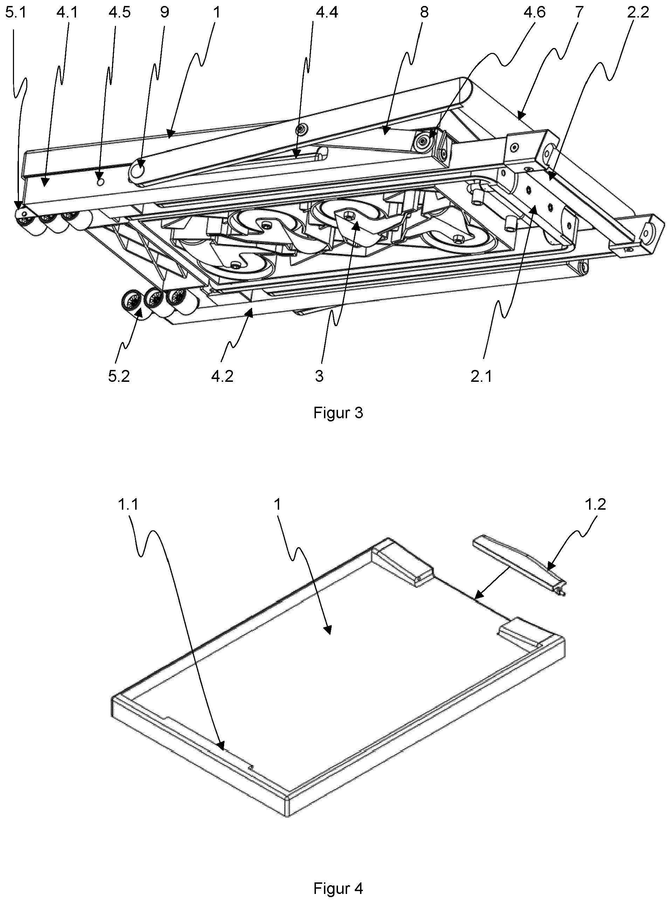

Die Figuren 1 bis 3 zeigen einen erfindungsgemäßen Handwagen H mit einem darauf anordbaren nicht dargestellten Einkaufskorb. Gemäß den Figuren 2 und 3 ist der Handwagen H zusammengeklappt.

Die Basis des Handwagens H bildet das Grundelement 1 auf das ein Einkaufskorb K gestellt werden kann. Ein derartiger Einkaufskorb ist vorzugsweise in Form eines handelsüblichen Klappkorbs ausgebildet, wobei diese Art der Klappkörbe standardmäßig über eine Kante verfügen. Diese Kante wird bei Montage des Klappkorbs auf der einen Seite unter ein, an dem Grundelement 1 vorgesehenen erstes Halteelement 1.1 geschoben. Gegenüberliegend ist ein zweites Halteelement 1.2 angeordnet, das herausnehmbar und/oder verstellbar ist und in Form einer Klemmverriegelung den Korb fixiert.

Diese Art der Fixierung des Korbes ermöglicht auch ein Klappen des Einkaufskorbes während der Installation auf dem Grundelement 1, da die Fixierung außerhalb des Korbes erfolgt.

Der Handwagen weist ein einklappbares Fahrwerk 2 mit einem ersten vorderen Rahmenelement 2.1 und einem zweiten hinteren Rahmenelement 2.2 mit daran angeordneten Rädern 3 auf. Das Fahrwerk 2 ist an einem ersten Längsträger 4, 4.1 und einem, über ein Grundelement 1 mit dem ersten Längsträger 4.1 verbundenen parallelen zweiten Längsträger 4.2 schwenkbar gelagert, wobei das erste Rahmenelement 2.1 mittels einer nicht dargestellten Achse in einer Bohrung 4.3 der Längsträger 4 gelagert ist. Das zweite Rahmenelement 2.2 ist in einer Führung 4.4 entlang der Längsträger 4 verschiebbar gelagert.

Die Längsträger 4 weisen einen ersten Endbereich und einen, dem ersten Endbereich gegenüberliegenden, zweiten Endbereich auf, wobei im ersten Endbereich je Längsträger 4 ein Rollelement 5 angeordnet ist, auf dem der Handwagen in den Kofferraum schiebbar ist. Das Rollelement 5 ist in Form einer Grundplatte 5.1 mit drei hintereinanderliegend angeordneten Rollen 5.2 ausgebildet, wobei die Rollen 5.2 je eine Rotationsachse aufweisen, die nach innen in Richtung des gegenüberliegenden Längsträgers 4 weist.

Das erste Rahmenelement 2.1 als Biegeprofil ausgebildet und an einer, mit den Längsträgern 4 verbundenen Achse in einer Bohrung 4.5 montiert. Die nicht dargestellte Achse erstreckt sich zwischen dem ersten und zweiten Längsträger 4.1, 4.2.

Im zweiten Endbereich je Längsträger 4 ein Gelenkpunkt 4.6 für eine Abstützstrebe 6 des hinteren Rahmenelement 2.2 und eines Schiebegriffelements 7 mit einem daran ausgebildeten Griffbereich angeordnet, die im zusammengeklappten Zustand das Schiebergriffelement 7 auf im Wesentlichen die Höhe des Grundelements 1 klappbar ist. Das Schiebergriffelement 7 ist über eine zweite Abstützstrebe 8 mit dem Längsträger 4 im Gelenkpunkt 4.6 verbunden.

Das hintere Rahmenelement 2.2 ist mittels Bolzen 9 in jeweils einer Führung 4.4 in dem ersten und zweiten Längsträger 4.1, 4.2 gelagert. An dem Bolzen 9 ist zudem das untere Ende des Schiebergriffelements 7 montiert, wobei im zusammenklappenden Zustand der Bolzen 9 entlang der Führung 4.4 nach vorn in Richtung des vorderen Endes der Längsträger gleitet und das hintere Rahmenelement 2.2 und das Schiebergriffelement 7 mitzieht.

Bevorzugt ist die Führung 4.4 mit einer PTFE-Beschichtung versehen, um die Gleitfähigkeit zu erhöhen. Die Verbindung zwischen den Abstützstreben 6 und 8 bildet der Bolzen 9, auf die zur Aufnahme des Rahmens des Griffes eine Gleitbuchse genutzt wird. Zwischen dem Längsträger 4 und den Abstützstreben 6 und 8 des Rahmenelements 2.2 und des Schiebegriffelements 7 sind bevorzugt, wo benötigt, Gleitringe angeordnet.

Gemäß den Figuren 2 und 3 sind für das Verstauen des Wagens bei Nichtgebrauch an der Unterseite des Grundelements 1 Haltemittel zum Verstauen der Räder 3 vorgesehen, wodurch sich der Platzbedarf bei der Lagerung weiter verringert. Die Räder 3 sind dafür von den Rahmenelementen 2.1, 2.2 abnehmbar ausgebildet und werden in einer Vertiefung innerhalb des Grundelements 1 angeordnet.

Figur 4 zeigt das Grundelement 1 im Einzelnen, wobei an dem Grundelement 1 das erste Halteelement 1.1 fest ausgebildet ist. Gegenüberliegend ist das zweites Halteelement 1.2 angeordnet, das herausnehmbar ist und in Form einer Klemmverriegelung den Korb fixiert. Durch eine derartige Fixierung des Korbes kann dieser auch bei erfolgter Montage auf dem Grundelement 1 zusammengeklappt werden. Der Handwagen findet insbesondere für übliche Klappkörbe Anwendung.

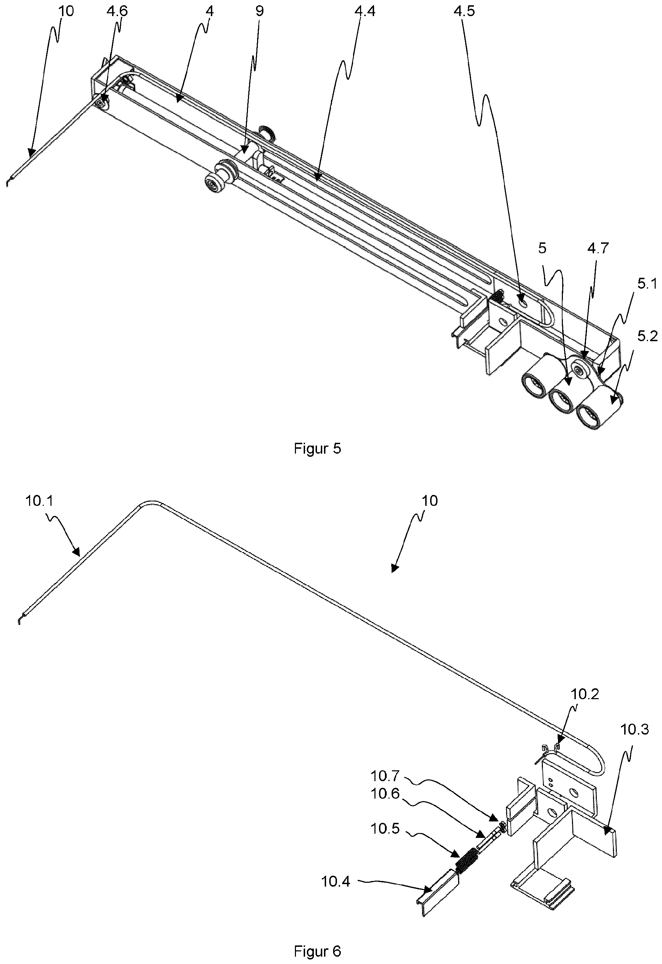

Die Figur 5 zeigt einen der beiden Längsträger 4, wobei der erste und zweite Längsträger 4.1, 4.2 einen identischen gespiegelten Aufbau aufweisen.

Der Längsträger 4 weist an seinem vorderen Ende das Rollelement 5 auf, welches das Aufsetzen auf der Stoßstange und das Rollen im Kofferraum ermöglichen. Es besteht aus einer Grundplatte 5.1, die an den Längsträger 4 innenseitig an einer Aufnahme 4.7 angeschraubt ist und sich Drehen kann, wodurch auch schräge Kanten möglich sind.

An der Grundplatte 5.1 können beliebig viele, im vorliegenden Fall drei Rollen 5.2 befestigt sein. Ein für ein Rad benötigtes Set besteht dabei aus einer Schraube die als Achse dient, eine Abstandselement und einer Mutter. Zwischen dem Abstandselement und der Mutter befindet sich die Rolle 5.2, welche bevorzugt durch zwei Kugellager gelagert wird. Zur Verschleißminimierung der Kugellager befindet sich zwischen diesen Beiden auf der Schaube noch ein Abstandselement.

Entlang des Längsträgers 4 erstreckt sich die Führung 4.4, in der der Bolzen 9 verschiebbar angeordnet ist. Zwischen der Führung 4.4 und dem Rollelement 5 ist die Bohrung 4.3 angeordnet, mittels derer die nicht dargestellte Achse des vorderen Rahmenelements 2.1 gelagert ist.

In dem Längsträger 4 ist ein Seilzugsystem 10 für die Entriegelung des vorderen Rahmenelements 2.1 angeordnet. Das Seilzugsystem 10 ist in Figur 6 herausgelöst dargestellt

In der Figur 6 ist das Seilzugsystem 10 für die Verriegelung des ersten Rahmenelements dargestellt.

Zur Sicherstellung, dass sich das Rahmenelement 2.1 vorne während der Benutzung nicht ungewollt einklappt, befindet sich hier ein Mechanismus, der sowohl Rahmenelement 2.1 im Nutzungs- als auch im Lagerungszustand fixiert.

Im Längsträger 4 befinden sich hierfür entsprechende Ausschnitte, wobei der Mechanismus bevorzugt in diese genietet wird.

Hauptbestandteil ist ein Bowdenzug 10.1, der die Bewegung aus einem nicht dargestellten Griff zum Mechanismus überträgt. Dieser ist mit Klammern 10.2 an einem Träger 10.3 fixiert. Der Träger 10.3 beinhaltet die Aufnahme für die Achse des vorderen Rahmenelements 2.1 für die vorderen Räder, einen Anschlag für dieses und auf der gegenüberliegenden Seite des Anschlags eine Führung für die Verriegelung. Die Verriegelung, bestehen aus einem Blech 10.4, Federn 10.5 und einer Achse 10.6, fixiert durch eine Mutter 10.7, wird durch die Federn 10.5 dauerhaft geschlossen und durch Zug an dem Bowdenzug 10.1 freigegeben.

Dieses Teil ist symmetrisch auch auf dem anderen Hauptträger zu finden. Die Bowdenzüge 10.1 werden am Zuggriff zusammengeführt, wodurch mit einem Griff beide Seiten entriegelt werden können.

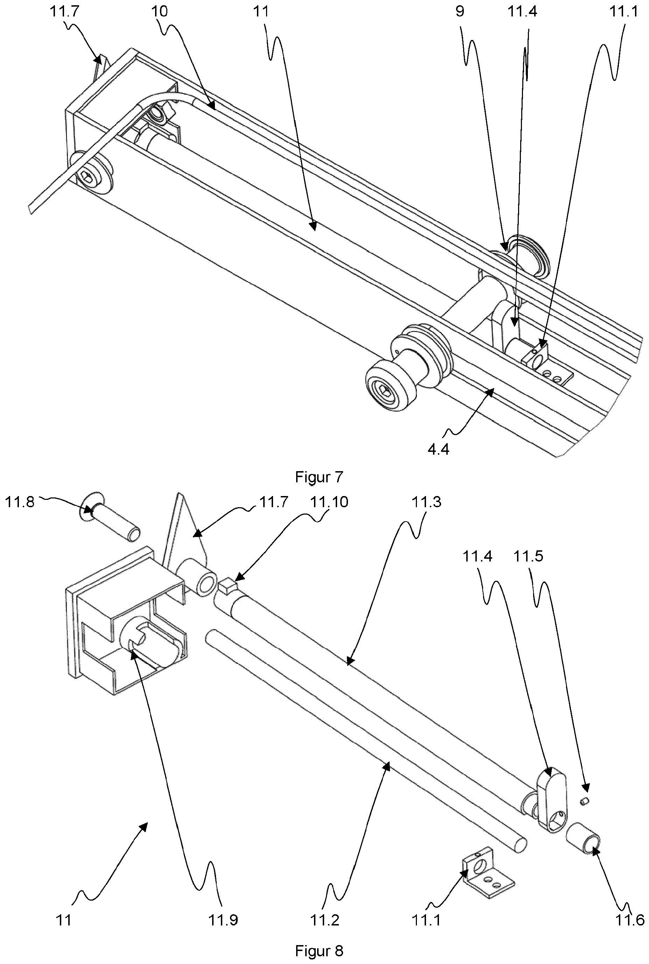

Die, in dem hinteren Bereich des Längsträgers 4 angeordnete Verriegelung des zweiten Rahmenelements 2.2 ist in der Figur 7 und als Explosionszeichnung in Figur 8 dargestellt. Zum Verhindern des Einklappens des hinteren Rahmenelements 2.2 während der Benutzung befindet sich zum einen in der Führung 4.4 im Längsträger 4 eine Ausbuchtung 4.8 nach oben, in die sich der Bolzen 9 drückt und zum anderen ein Riegelmechanismus 11. Dieser Riegelmechanismus 11 ist mit einem Halter 11.1 in dem Längsträger 4 gelagert und besteht aus einer inneren Achse 11.2 und einem darauf geschobenem Rohr 11.3. An diesem Rohr 11.3 befindet sich der Riegel 11.4, welcher mittels einer Madenschraube 11.5 befestigt ist. Auf der inneren Achse 11.2 befindet sich eine Feder 11.6 zwischen dem Halter 11.1 und dem Rohr 11.3.

Auf der anderen Seite ist ein Hebel 11.7 mit einer Schraube 11.8 aufgeschraubt. Auf dieser Seite ist die Lagerung durch die Endkappe realisiert, die innen mit Nuten 11.9 in zwei Stellungen versehen ist. auf dem Rohr 11.3 befindet sich das Gegenstück 11.10, welches durch die Feder 11.6 in der vordefinierten Stellung fixiert wird.

### Bezugszeichenliste

1 Grundelement
1.1 erstes Halteelement
1.2 zweites Halteelement
2 Rahmenelement
2.1 Erstes vorderes Rahmenelement
2.2 Zweites hinteres Rahmenelement
3 Räder
4 Längsträger
4.1 Erster Längsträger
4.2 Zweiter Längsträger
4.3 Bohrung
4.4 Führung
4.5 Bohrung
4.6 Gelenkpunkt
4.7 Aufnahme
4.8 Ausbuchtung
5 Rollelement
5.1 Grundplatte
5.2 Rolle
6 Abstützstrebe
7 Schiebegriffelement
8 Abstützstrebe
9 Bolzen
10 Seilzugsystem
10.1 Bowdenzug
10.2 Klammer
10.3 Träger
10.4 Blech
10.5 Feder
10.6 Achse
10.7 Mutter
11 Riegelmechanismus
11.1 Halter
11.2 Innere Achse
11.3 Rohr
11.4 Riegel
11.5 Madenschraube
11.6 Feder
11.7 Hebel
11.8 Schraube
11.9 Nut
11.10 Gegenstück

## Patentansprüche

1. Handwagen zum direkten Verladen in ein Kraftfahrzeug, insbesondere in den Laderaum eines Kraftfahrzeugs, wobei der Handwagen ein einklappbares Fahrwerk mit einem ersten Rahmenelement (2.1) und einem zweiten Rahmenelement (2.2) mit daran angeordneten Rädern (3) aufweist, das an einem ersten Längsträger (4, 4.1) und einem, über ein Grundelement (1) mit dem ersten Längsträger (4.1) verbundenen parallelen zweiten Längsträger (4, 4.2) schwenkbar gelagert ist, wobei das erste Rahmenelement (2.1) mittels einer Achse in einer Bohrung (4.5) der Längsträger (4) und das zweite Rahmenelement (2.2) in einer Führung (4.4) entlang der Längsträger (4) verschiebbar gelagert ist und wobei die Längsträger (4) je einen ersten Endbereich und einen, dem ersten Endbereich gegenüberliegenden, zweiten Endbereich aufweisen, wobei im ersten Endbereich je Längsträger (4) ein Rollelement (5) angeordnet ist, auf dem der Handwagen in den Kofferraum schiebbar ist und im zweiten Endbereich je Längsträger (4) ein Gelenkpunkt (4.6) für eine Abstützstrebe (6) des hinteren Rahmenelements (2.2) und ein Abstützelement (8) eines an dem Bolzen (9) montierten Schiebegriffelements (7) angeordnet ist derart, dass im zusammengeklappten Zustand das Schiebergriffelement (7) auf im Wesentlichen die Höhe des Grundelements (1) klappbar ist.

2. Handwagen nach Anspruch 1, **dadurch gekennzeichnet, dass** das Rollelement in Form einer an dem Längsträger drehbar gelagerten Grundplatte mit wenigstens zwei hintereinanderliegend angeordneten Rollen ausgebildet ist, wobei die Rollen je eine Rotationsachse aufweisen, die nach innen in Richtung des gegenüberliegenden Längsträgers weist.

3. Handwagen nach Anspruch 1 oder 2, **dadurch gekennzeichnet, dass** das Grundelement (1) eine umfangsseitige Führung für einen Einkaufskorb aufweist und dass das Grundelement (1) ein erstes Halteelement an einer ersten Seite und ein, dem ersten Halteelement gegenüberliegend zweites Halteelement aufweist, wobei das zweite Halteelement herausnehmbar und/oder verstellbar ist und dass eine umlaufende Kante eines Einkaufskorbs unter die Halteelemente schiebbar ist derart, dass eine Fixierung des Einkaufskorbs auf dem Grundelement (1) erfolgt.

4. Handwagen nach einem der Ansprüche 1 bis 3, **dadurch gekennzeichnet, dass** das vordere Rahmenelement (2.1) mittels eines Seilzugsystems (10) aus einer festen Position entriegelbar ist.

5. Handwagen nach einem der Ansprüche 1 bis 4, **dadurch gekennzeichnet, dass** das hintere Rahmenelement an dem ersten Längsträger mittels eines ersten Bolzens und an dem zweiten Längsträger mittels eines zweiten Bolzens in der jeweiligen Führung gelagert ist, wobei die Führung eine Ausbuchtung nach oben aufweist, in die sich die Bolzen in der ausgeklappten Position drücken.

6. Handwagen nach Anspruch 5, **dadurch gekennzeichnet, dass** mittels der Bolzen das hintere Rahmenelement und das Schiebegriffelement koaxial gelagert und miteinander verbunden sind.

7. Handwagen nach einem der Ansprüche 1 bis 6, dass das hintere Rahmenelement mittels eines drehbaren Riegels in der Führung gegen ein unbeabsichtigtes Einklappen gesichert ist.

8. Handwagen nach Anspruch 7, **dadurch gekennzeichnet, dass** der Riegel über ein Rohr mit einem Hebel verbunden ist, der mittels Nuten in einer ersten und zweiten Position fixierbar ist, wobei die erste Position des Riegels das hintere Rahmenelement gegen ein Einklappen fixiert und die zweite Position die Führung frei gibt.

9. Handwagen nach einem der Ansprüche 1 bis 8, **dadurch gekennzeichnet, dass** das vordere Rahmenelement in Form eines Biegeprofils ausgebildet ist.

10. Handwagen nach einem der Ansprüche 1 bis 9, **dadurch gekennzeichnet, dass** die Räder (3) abnehmbar sind.
